Europäisches Patentamt

European Patent Office

Office européen des brevets

(11) Veröffentlichungsnummer: **0 240 832**

**A1**

## (12) EUROPÄISCHE PATENTANMELDUNG

(21) Anmeldenummer: 87104332.9

(22) Anmeldetag: 21.03.87

(51) Int. Cl.³: **B 60 S 1/48**

(30) Priorität: 21.03.86 DE 3609574

(43) Veröffentlichungstag der Anmeldung:
14.10.87 Patentblatt 87/42

(84) Benannte Vertragsstaaten:
AT BE CH DE ES FR GB GR IT LI LU NL SE

(71) Anmelder: Alligator Ventilfabrik GmbH
Postfach 1280
D-7928 Giengen/Brenz(DE)

(72) Erfinder: Scheibe, Wolfgang, Dr.-Ing.
Odenheimstrasse 11
D-7140 Ludwigsburg 12(DE)

(72) Erfinder: von Zabern, Werner
Herbrandstrasse 14
D-7928 Giengen/Brenz(DE)

(74) Vertreter: Hiebsch, Gerhard F., Dipl.-Ing.
Hiebsch & Allgeier Patentanwälte Erzbergerstrasse 5A
Postfach 464
D-7700 Singen 1(DE)

(54) Elektrische Heizvorrichtung für Waschflüssigkeit in Schweibenwaschanlagen von Fahrzeugen.

(57) Eine elektrische Heizvorrichtung für Scheibenwaschanlagen von Fahrzeugen mit zwischen wenigstens einer Spritzdüse und einem Behälter für Waschflüssigkeit verlaufenden Durchlußraum einer Flüssigkeitsleitung sowie mit einer elektrischen Stromquelle, soll in Aufbau und Herstellung einfach und zudem betriebssicher sein, darüber hinaus kostengünstig in Herstellung und Wartung bleiben.

Hierzu ist der Durchfluß (47) der Flüssigkeitsleitung ($20_a$, $20_b$) mit einer Hinleitung und einer Rückleitung zumindest eines isolierten Heizdrahtes (31) versehen, dessen beide freie Enden jeweils mit einem nach außen ragenden Stromanschluß (45, $45_r$) verbunden und gegen den Durchflußraum (47) isoliert sind. Dabei soll der Heizdraht (31) zumindest aus dem einen Ende der Flüssigkeitsleitung ($20_a$, $20_b$) mit einem Steck- oder Schubende hinausragen, welches bevorzugt aus einem U-förmig gelegten Abschnitt des Heizdrahtes (31) besteht.

Fig.4

EP 0 240 832 A1

B E S C H R E I B U N G

Die Erfindung betrifft eine elektrische Heizvorrichtung
für Scheibenwaschanlagen von Fahrzeugen mit zwischen
wenigstens einer Spritzdüse und einem Behälter für
Waschflüssigkeit verlaufenden Durchflußraum einer Flüssigkeitsleitung, dem ein an eine elektrische Stromquelle anschließbarer Heizstrang zugeordnet ist.

Es sind elektrische Wassererhitzer für Automobile bekannt,
deren Flüssigkeitsleitung als leitfähiges Rohr ausgebildet
ist; dieses ist gleichzeitig elektrisches Heizelement und
erwärmt die hindurchströmende Waschflüssigkeit.

Derartige Heizvorrichtungen sind zum einen sehr kostenträchtig
sowie zum anderen in ihrem Aufbau kompliziert. Außerdem
hat sich gezeigt, daß die flüssigkeitsdurchströmten Rohre
keine ausreichende Betriebssicherheit aufweisen.

In Kenntnis dieses Standes der Technik hat sich der Erfinder
das Ziel gesetzt, eine Heizvorrichtung der eingangs erwähnten
Art zu schaffen, welche in Aufbau und Herstellung einfach
und zudem betriebssicher ist. Darüber hinaus soll die Heizvorrichtung kostengünstig in Herstellung und Wartung bleiben.

Zur Lösung dieser Aufgabe führt, daß der Durchflußraum der
Flüssigkeitsleitung mit einer Hinleitung und einer Rückleitung wenigstens eines isolierten Heizdrahtes versehen ist,
dessen beide freie Enden jeweils mit einem nach außen ragenden Stromanschluß für die Stromquelle verbunden und gegen
den Durchflußraum isoliert sind. Bevorzugtermaßen ist jener
Heizdraht doppeltrumig, also i. w. mit achsparallelen Leitungsabschnitten angeordnet, kann aber auch Teil einer koaxialen Stromführung sein, deren einer Leiter den Heizdraht
-- unter Zwischenschaltung einer Isolierung -- als Mantel
umgibt.

Dabei soll der Heizdraht zumindest aus dem einen Ende der
Flüssigkeitsleitung mit einem Steck- oder Schubende hinausragen, welches bevorzugt aus einem U-förmig gelegten Abschnitt des Heizdrahtes besteht.

Nach einem weiteren Merkmal der Erfindung ist das Schubende aus einem gedrillten Abschnitt des Heizdrahtes gefertigt
oder aus jenem Heizdraht mit ihn und seine Isolierung umfangenden Mantel leitenden Werkstoffes und ist damit besonders
wirkungsvoll sowie stabil.

Im Rahmen der Erfindung liegt es auch, daß das Schubende
des Heizdrahtes -- welcher bevorzugt in die von einem Schlauch
gebildete Flüssigkeitsleitung eingelegt ist -- aus letzterer
hinausragt, sowie durch einen Ausflußstutzen des Behälters
in die darin befindliche Waschflüssigkeit hineingeführt
ist; der Heizdraht erwärmt -- nachdem die Anschlußenden
der Stromanschlüsse mit der Lichtmaschine bzw. einer entsprechenden Stromquelle verbunden worden sind -- die Waschflüssigkeit dann insbesondere im Bereich des Behälterausflusses, was das Einfrieren zumindest in diesem Bereich
hintanhält. Außerdem heizen die Heizdrahttrume die in
der Schlauchleitung befindliche Waschflüssigkeit. Die
bereits erwähnte Doppeltrumigkeit hat den Vorzug, daß
immer eine Hin- und eine Rückführung des Heizstromes in
der Schlauchleitung erfolgt.

Jene Schubenden, also beispielsweise die Verdrillungen des
Heizdrahtes, können an allen Stellen vorgesehen werden, an
denen die Heizleistung örtlich erhöht sein soll, also nicht
nur im Behälter, sondern auch im Bereich der Flüssigkeitspumpe oder vor allem unmittelbar an oder in der Spritzdüse. Das Schubende des Heizdrahtes vermag problemlos in
die entsprechenden Schlauchanschlußstutzen hineingesteckt
zu werden und ruht dann dort geschützt.

Es ergibt sich mit dieser einfachen Heizdrahtanordnung eine sehr effektive Heizung sämtlicher den Strömungsraum
für die Waschflüssigkeit bildender Einzelaggregate.

Im Rahmen der Erfindung liegt es, daß die Stromanschlüsse
oder auch Heizstromkabel innerhalb eines Einspeisekörpers
mit den Enden des Heizdrahtes verbunden sind, welcher durch
Schlauchanschlußstutzen jenes Einspeisekörpers in diesen
hineingeführt wird.

Nach einem anderen erfindungsgemäßen Merkmal ist der Einspeisekörper mit
einem Durchflußraum für die Waschflüssigkeit versehen, in den beidends die Schlauchanschlußstutzen des Einspeisekörpers
münden und dem Ausnehmungen des Einspeisekörpers benachbart sind. In diesen Ausnehmungen ruhen erfindungsgemäß
die Anschlußenden der Stromanschlüsse mit den daran festliegenden freien Enden des Heizdrahtes in Vergußmasse und
sind dadurch gegen die Waschflüssigkeit ohne aufwendige
Maßnahmen ausreichend isoliert.

Als günstig hat es sich erwiesen, die beiden Anschlußenden für
den Heizdraht beidseits des Durchflußraumes gegenüberzulegen,
den ein Trum des Heizdrahtes          durchläuft. Außerdem
gehen von diesem Durchflußraum die mit den Stromanschlüssen
verbundenen Heizdrahtenden aus. Dies ergibt im Durchflußraum selbst zumindest drei parallele Abschnitte des einen
Heizdrahtes. Selbstverständlich können im Rahmen der Erfindung
auch andere Konfigurationen vorgesehen werden.

Die Form des Einspeisekörpers ist nicht an die beschriebene
Gestalt gebunden, kann beispielsweise auch ein T-Stück sein
oder ein Druckventil.

Der Heizdraht kann beispielsweise aus einem Werkstoff bestehen, welcher bei steigender Temperatur seinen elektrischen Widerstand so erhöht, daß die Heizleistung abnimmt,
so daß damit eine Regelung erfolgen kann.

Ebenso ist es möglich, ein ungeregeltes System zu verwenden,
bei dem nur die von dem Heizdraht berührten Bauteile ausreichend temperaturfest sein müssen.

Auch kann -- gesteuert durch einen beispielsweise im Einspeisekörper befindlichen Temperatursensor -- eine Regelschaltung betrieben werden, welche den Heizstrom in Abhängigkeit von der Temperatur schaltet. Eine solche Regelschaltung vermag auch durch den elektrischen Widerstand des
Heizdrahtes selbst betrieben zu werden.

Der Einspeisekörper mit den beiden davon ausgehenden Schlauchabschnitten oder Flüssigkeitsleitungen kann erfindungsgemäß
entweder zwischen Behälter und Förderpumpe oder zwischen
letzterer und der Spritzdüse eingesetzt werden. Bevorzugt
sind zwei Einspeisekörper, von denen der eine der Spritzdüse benachbart ist und der andere dem Behälter.

Erfindungsgemäß sind die Enden des Heizdrahtes an Heizstromkabel der Fahrzeugbatterie unter Zwischenschaltung wenigstens eines Schaltrelais angeschlossen. Wird der Motor des
Fahrzeuges angelassen, kommt von dessen Lichtmaschine die
erforderliche Spannung von etwa 12 Volt, die jenes Schaltrelais anzieht und den Heizstromkreis schließt; von der
Batterie wird Heizstrom von etwa 4 Ampère freigegeben.

10

Die Stromzufuhr kann durch einen -- bevorzugt zwischen
Schaltrelais und Lichtmaschine vorgesehenen -- Schalter
von Hand oder auch mittels einer Temperaturüberwachung
unterbrochen werden.

Der erforderliche Widerstand des Heizdrahtes kann ohne
weiteres -- abhängig von der Drahtlänge -- errechnet werden, um zu gewährleisten, daß vorgegebene Temperaturwerte
auch bei kurzen Schlauchleitungen nicht überschritten
werden.


Besondere Ausführungsformen eigenen erfinderischen Wertes sind in den Ansprüchen $_{18}$ bis 24 beschrieben;
diese Vorrichtung ist für Förderpumpen von Waschflüssigkeit bestimmt, die unmittelbar an deren Behälter angebaut sind, bzw. mit dem Ansaugstutzen in diesen einragen. Der hier verwendete erfinderische Einspeisekörper
wird statt der üblichen Gummi- Dichtelemente zwischen
Förderpumpe und Behälterwandung so eingesetzt, daß ein
i.w. scheibenförmiger Basiskörper zwischen jenen durch
Gummidichtungen gehalten wird. Von diesem Basisteller
gehen koaxiale Hülsen aus, welche zwischen sich einen
Ringraum für den Heizdraht bilden; dieser wird durch
den Ringraum zu einem Aufnahmeraum im Basisteller geführt und dort zum einen an den Stromanschluß angelegt
sowie zum anderen, bevorzugt mit Vergußmasse isoliert.

Weitere Vorteile, Merkmale und Einzelheiten der Erfindung
ergeben sich aus der nachfolgenden Beschreibung bevorzugter Ausführungsbeispiele ·sowie anhand der Zeichnung;
diese zeigt in

Fig.  1   einen Schnitt durch einen Teil eines in der
          Zeichnung nicht dargestellten Kraftfahrzeuges;

Fig.  2   ein Detail zu Fig. 1 im Schnitt;

Fig.  3   das Detail nach Fig. 2 in anderer Ausführung;

Fig.  4   den Längsschnitt durch einen Einspeisekörper;

Fig.  5   eine weitere Ausführung zu Fig. 4;

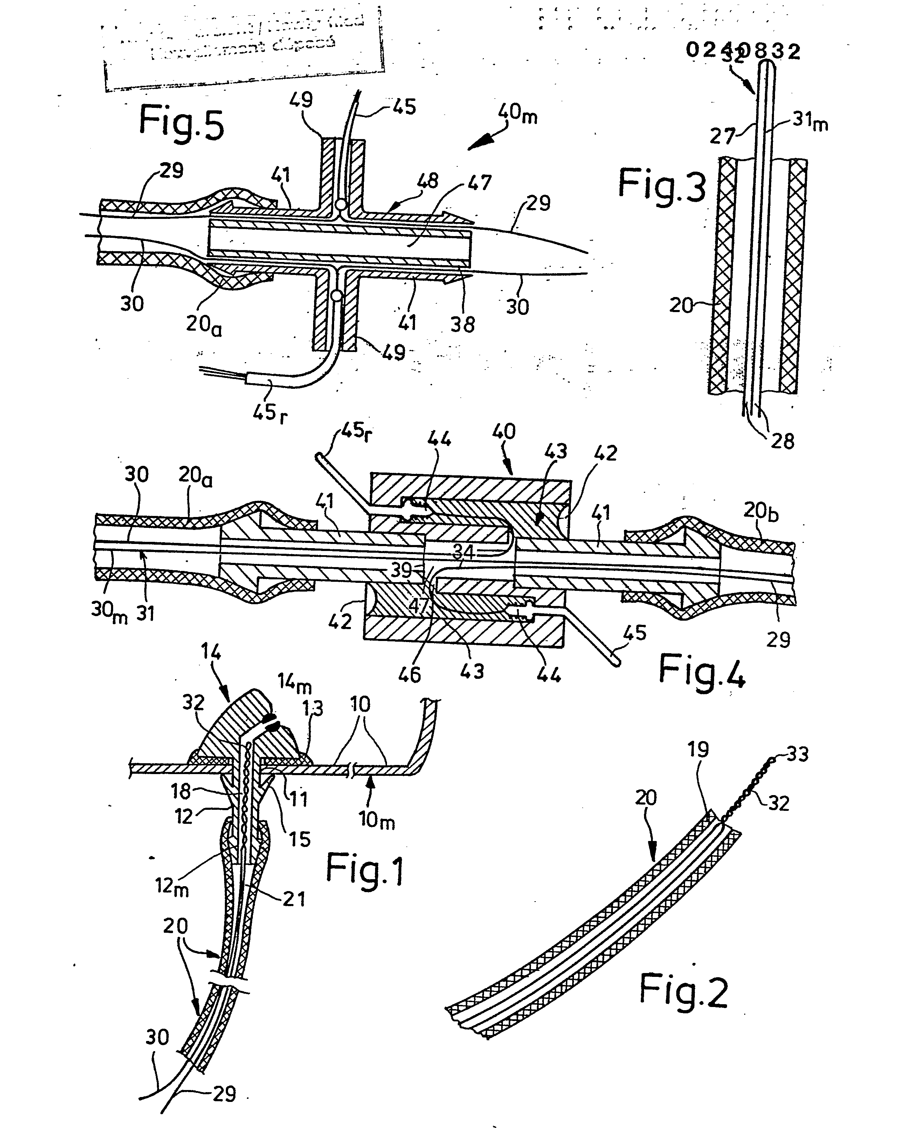

Fig.  6   eine schematisiert gezeichnete sowie teilweise
          geschnittene Anlage in einer gegenüber den
          Fig. 4 und 5 verkleinerten Wiedergabe;

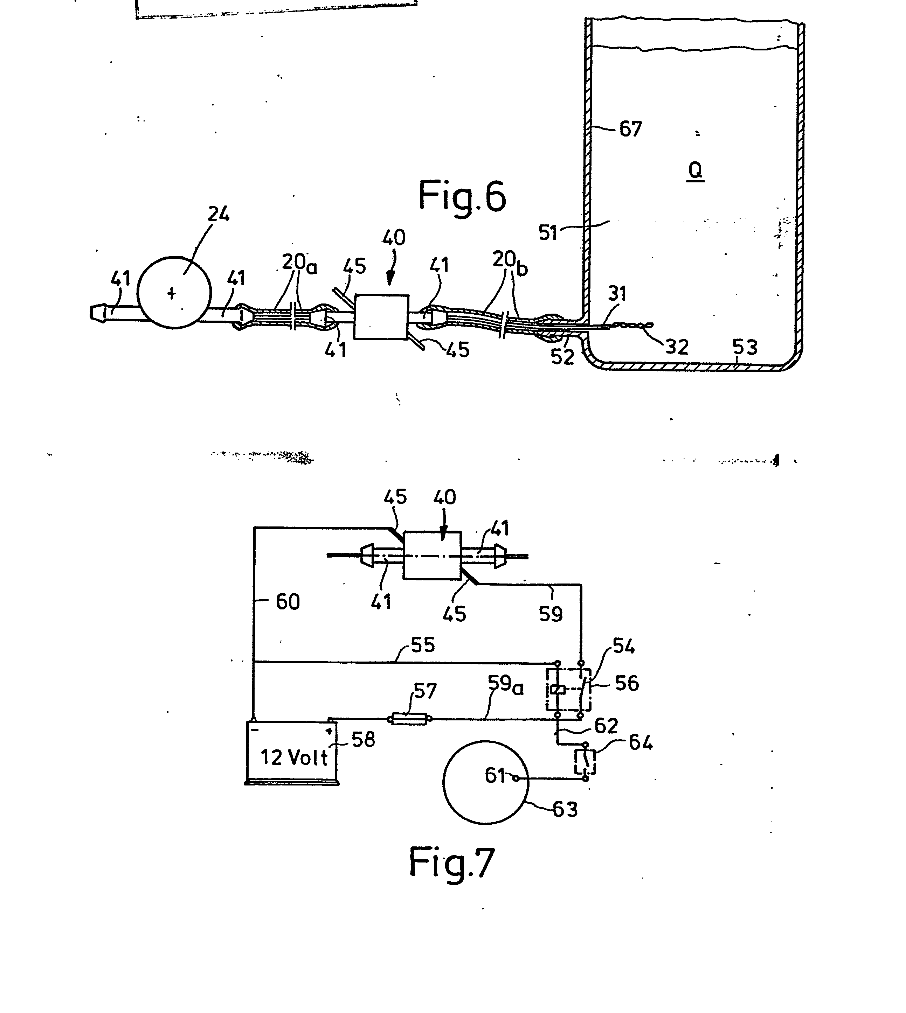

Fig.  7   ein Schaltschema;

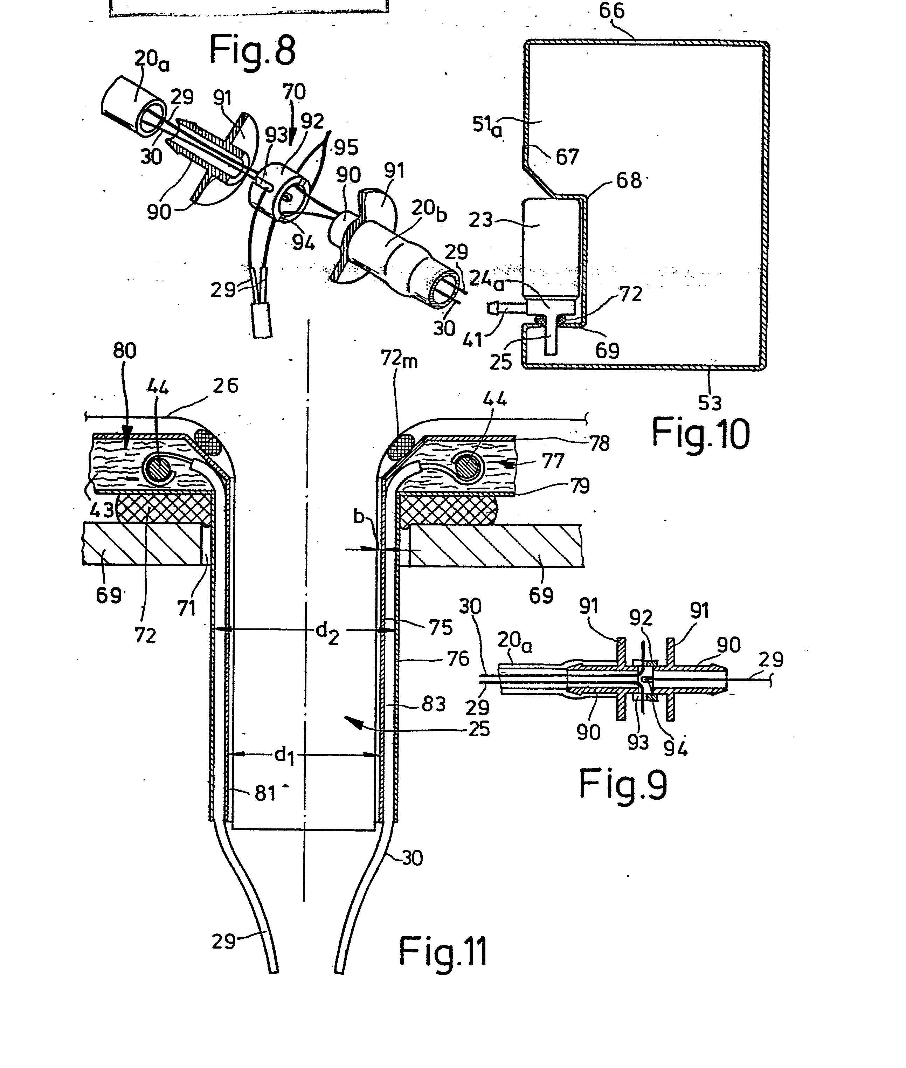

Fig.  8   einen weiteren Einspeisekörper in Schrägsicht;

Fig.  9   einen Längsschnitt zu Fig. 8;

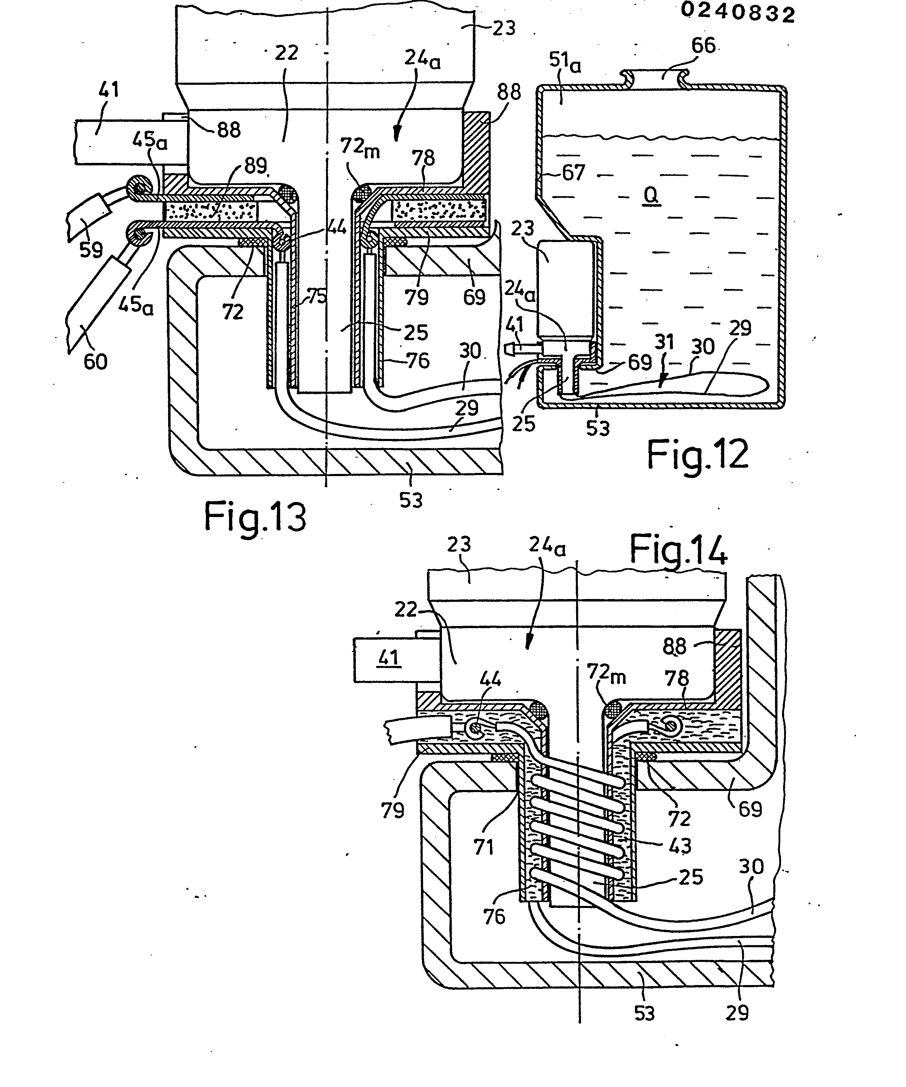

Fig.10,12 Schnitte durch andere Behälter;

Fig. 11   ein gegenüber Fig. 10 vergrößertes Detail
          zu einer anderen Ausführung;

Fig. 13,  gegenüber Fig. 12 vergrößert dargestellte
     14   Ausführungen;

Auf einem Blechteil 10 -- beispielsweise einer Motorraumhaube -- eines in der Zeichnung aus Gründen der Übersichtlichkeit nicht weiter dargestellten Kraftfahrzeuges ist in
einer Ausnehmung 11 gemäß Fig. 1 der dübelähnliche Steckfuß 12 einer -- auf einer Unterlagscheibe 13 ruhenden --
Spritzdüse 14 für eine Waschflüssigkeit Q so festgelegt,
daß an den Steckfuß 12 außen angeformte Widerhakenstege
15 der Blechteilinnenseite $10_m$ anliegen. Die Mündung $14_m$
der Spritzdüse 14 ist zu der in Fig. 1 vernachläßigten
Windschutzscheibe des Kraftfahrzeuges hin gerichtet.

Auf dem als Schlauchanschlußstutzen $12_m$ ausgebildeten freien
Ende des Steckfußes 12 sitzt eine Schlauchleitung 20, in
deren Schlauchraum 21 ein Heizdraht 31 mit Hinleitung 29
und Rückleitung 30 verläuft. Diese Abschnitte 29, 30 des
Heizdrahtes 31 sind miteinander endwärts jeweils zu einem
Steck- oder Schubende 32 verdrillt, welches in einen Kanal
18 der Spritzdüse 14 eingeführt ist und dort -- nicht wiedergegeben -- festgelegt sein kann.

Auch aus dem freien Ende 19 der Schlauchleitung 20 ragt
ein verdrilltes Schubende 32 heraus, bei dem an der endwärtigen Schlaufe 33 zu erkennen ist, daß beide Heizdrahtabschnitte 29, 30 Teile des bei 33 U-förmig gebogenen Heizdrahtes 31 sind. Letzterer besteht aus einem Werkstoff, der
bei steigender Temperatur seinen elektrischen Widerstand so
erhöht, daß die Heizleistung abnimmt, und ist zudem mit
einem hitzebeständigen Isoliermaterial ummantelt.

13

Bei dem in Fig. 3 gezeigten Ausführungsbeispiel ist der
Heizdraht $31_m$ in einer Isolierung 28 geführt, die ihrerseits von einem -- den Heizstrom rückführenden -- Mantel
27 umgeben ist. Letzterer ist        endwärts kalottenartig verschweißt.

Bei einer nicht dargestellten Ausführung ist eine Regelschaltung vorgesehen, die den Heizstrom in Abhängigkeit
von der Temperatur schaltet. Die Regelschaltung wird gegebenenfalls durch den temperaturabhängigen Widerstand
des Heizdrahtes oder durch einen Temperatursensor gesteuert,
der sich beispielsweise in einem quaderartigen oder zylindrischen Einspeisekörper 40 befindet, wie ihn Fig. 4 wiedergibt.

Der Einspeisekörper 40 ist mit koaxial abragenden Schlauchstutzen 41 und neben diesen -- zueinander gegensinnig --
verlaufenden Sacklöchern 42 ausgestattet, die mit Vergußmasse 43 gefüllt sind als Einbettung für Anschlußenden 44
von Stromanschlußzungen $45,45_r$.

Der Einspeisekörper 40 ist in die Schlauchleitung 20 für
die Waschflüssigkeit Q integriert. Die benachbarten
Schlauchenden sind der besseren Übersicht wegen in Fig. 4
mit $20_a$ und $20_b$ bezeichnet; Fig. 4 läßt im übrigen ebenfalls erkennen, daß die Abschnitt 29,30 Teile eines einzigen Heizdrahtes 31 sind, dessen entisolierte Enden fest in
den Anschlußenden 44 der Stromanschlußzungen $45,45_a$ sitzen
und von dort aus jeweils unter Bildung einer -- Durchbrüche
46 zwischen den Isolierräumen oder Sacklöchern 42 und einem die Mündungen 39 der Schlauchstutzen 41 verbindenden
Durchflußraum 47 durchsetzenden -- Schleife 34 gegenläufig
zum benachbarten Schlauchstück $20_a$ bzw. $20_b$ gezogen sind, aus dem andernends das Schubende 32 ragt. Zu dem einen
der Schubenden 32 führt die Hinleitung 29 und wird an der
endwärtigen Schlaufe 33 zur Rückleitung, welche der besseren
Übersicht halber in Fig. 4 mit $30_m$ bezeichnet ist; diese
Rückleitung führt den Strom dem anderen Schubende 32 zu
und verläßt dieses endgültig als Rückleitung 30.

Bei dem Einspeisekörper 40 der Fig. 4 sind die Abschnitte
29, 30 Teile des ummantelten Heizdrahtes 31, der in allen
Bereichen innerhalb der Schlauchleitung 20 mit seinen Abschnitten 29, $30_m$ bzw. $30_m$, 30 oder 29,30 zweitrumig ist.

Der Einspeisekörper $40_m$ der Fig. 5 besteht aus einem kreuzartigen Formkörper 48 aus den beiden koaxialen Schlauchstutzen 41 und von deren Mitte rechtwinklig abstehenden
Anschlußarmen 49, in denen -- mit Hinleitungen 29 und Rückleitungen 30 verbundene -- Stromanschlußzungen $45,45_r$
isoliert sind.

Der Durchflußraum 47 wird hier von einem einfachen Einschubrohr 38 umgeben, zwischen dem und jenen Schlauchstutzen 41 die Hinleitungen 29 und Rückleitungen 30 verlegt sind. Das Einschubrohr 38 kann auch vernachläßigt
werden.

Fig. 6 zeigt eine Anlage, deren Einspeisekörper 40 zwischen
einer Förderpumpe 24 und einem Behälter 51 für Waschflüssigkeit Q liegt und sowohl mit der Förderpumpe 50 als auch
mit dem Behälter 51 durch Schlauchstücke $20_a$ und $20_b$ verbunden ist. In die Waschflüssigkeit Q ragt ein Schubende
32 des Heizdrahtes 31 ein. Nicht erkennbar ist, daß auch
in den Schlauchanschlußstutzen 41 der Förderpumpe 24 ein
Schubende 32 eingeführt ist. Diese Anlage hat den Vorteil,
daß die Waschflüssigkeit Q im Behälter 51 am Behälterausflußstutzen 52 nahe des Behälterbodens 53 die Waschflüssigkeit Q auch bei niedrigen Temperaturen fließfähig hält, wenn
im Heizdraht 31 nach dem Verbinden seiner Stromanschlußzungen
45, 45$_r$     mit Heizstromkabeln 59,60 einer Batterie 58
ein Heizstrom von beispielsweise 4 Ampère fließt.

In Fig. 7 führt vom Pluspol der Batterie 58 ein mit Sicherung 57 ausgestattetes Heizstromkabel 59$_a$ zur Zunge 54 eines
Schaltrelais 56, von dem das Heizstromkabel 59 weitergeführt sowie eine Steuerleitung 55 an das Heizstromkabel 60
des Minuspols der Batterie 58 angeschlossen ist. Jener
Steuerleitung 55 liegt eine Anschlußleitung 62 der Lichtmaschine 63 mit Schalter 64 gegenüber.

Wird der Motor des Kraftfahrzeuges angelassen, und gibt
die Lichtmaschine 63 selbst Energie ab, dann liegt an
deren Klemme 61   eine Spannung von etwa 12 Volt an,
so daß das Schaltrelais 56 anzieht und den Heizstromkreis
schließt. Gleichzeitig wird von der Batterie 58 über das
Schaltrelais 56 der Heizstrom von 4 Ampère freigegeben.
Wird der Motor des Kraftfahrzeuges abgestellt, unterbricht
das Schaltrelais 56 nach Stromabfall der Lichtmaschine 63
den Heizstrom. Der zusätzliche Schalter 64 kann die gesamte beschriebene Stromführung unterbrechen.

Bei einer anderen Schaltungsausführung kann das die
Sicherung 57 enthaltende Heizstromkabel 59$_a$ des Pluspols
unmittelbar zu einer der Stromanschlußzungen 45 und zur
anderen Stromanschlußzunge 45 ein Heizstromkabel führen,
welches an der Zunge 54 des Relais 56 festliegt. Der Zunge
54 liegt hier ein Kontakt des Heizstromkabels des Minuspols der Batterie gegenüber, wobei an dieses Heizstromkabel ·   die Steuerleitung angeschlossen ist, die anderseits am Relais gegenüber der Anschlußleitung 62 endet.

16

Bei einer nicht gezeigten Ausführungsform der Anlage ist
im Behälter 51 zumindest ein Teil der heizdrahtführenden
Schlauchleitung angebracht, welche die Waschflüssigkeit Q
insgesamt fließfähig hält.

Fig. 8,9 zeigt einen Einspeisekörper 70 besonders einfacher
Ausführung; zwei in ihren Zentren von Rohrstücken 90 durchdrungene Scheiben 91 werden von einem Kupplungsring 92 aneinandergehalten - dieser verbindet die Rohrstücke 90 der
Scheiben 91 und weist an jeder Kante ein Paar von Sackschlitzen 93, 94 auf. In einem Paar der Sackschlitze 93 sind
die beiden Trume 29,30 aus einem Schlauchstück $20_a$ gelagert,
im anderen Paar 94 die des zweiten Schlauchstückes $20_b$. Bei
95 sind zwei Trume 30 zusammengelötet, die Trume 29 hingegen
nach außen geführt. Nicht dargestellt ist, daß dieser Einspeisekörper E zwischen seinen Scheiben 91 in zusammengebautem Zustand mit einer Vergußmasse versehen ist, welche auch
das Ende 95 erfaßt.

Die Ausführungsform eines Behälters $51_a$ mit Einfüllöffnung
66 gemäß Fig. 10 weist in einer Behälterwand 67 eine nischenartige Einformung 68 auf, in deren Bodenabschnitt 69
eine Ausnehmung 71 für den von einer Dichtung 72 umgebener
Ansaugstutzen 25 einer Förderpumpe $24_a$ vorgesehen ist. Oberhalb letzterer ist in Fig. 10 ein Pumpenmotor 23 zu erkennen sowie seitlich ein von der Förderpumpe $24_a$ ausgehender
Schlauch- oder Druckstutzen 41 zum Anschluß der hier nicht
dargestellten Schlauchleitung 20 der Spritzdüse/n 14.

Beim Ausführungsbeispiel der Fig. 11 ist zwischen Ansaugstutzen 25 und Pumpenwand 26 bzw. zwischen diesen anliegenden Gummidichtungen 72, $72_m$ ein Einspeisekörper 80 aus zwei
Basistellern 78,79 und an diese angeformten konzentrischen
Hülsen 75,76 angebracht.

Die innere Hülse 75 -- eines Durchmessers $d_1$ von hier 6,8 mm -- umgibt den Ansaugstutzen 25 unter Bildung eines Spaltes 81 einer Weite b von weniger als 0, 1 mm. Die äußere Hülse 76 weist dazu einen inneren Durchmesser $d_2$ von 8,4 mm auf. In den zwischen den Hülsen 75,76 entstehenden Ringraum 83 verlaufen Heizdrahttrume 29,30, deren freie Enden an Anschlußenden 44 von Stromanschlüssen in einer Vergußmasse 43 festliegen. Letztere befindet sich zwischen den beiden Basistellern 78,79 und verbindet diese zu einer einheitlichen Basisscheibe 77.

Bei den Ausführungsbeispielen der Fig. 13,14 ist der obere Basisteller 78 mit einem hochgezogenen Schüsselrand 88 versehen, um eine verbesserte Wärmezufuhr zum Pumpenraum 22 zu erhalten.

Zwischen den Basistellern 78,79 verlaufen in Fig. 13 Stromanschlüsse $45_a$, die beidseits eines PTC-Heizelementes 89 angeordnet sind; letzteres regelt ab einer bestimmten Temperatur die Heizleistung selbsttätig gegen null. Der Heizdraht 31 ist im Behälter $51_a$ ausgelegt.

Bei der Ausführung nach Fig. 14 sind die Heizleitungen 29,30 um den Ansaugstutzen 25 gewickelt, wodurch eine höhere Wärmeabgabe in den Pumpenraum 22 erfolgt.

A-143 /EPA                                          i0240832

## A N S P R Ü C H E

1. Elektrische Heizvorrichtung für Scheibenwaschanlagen
   von Fahrzeugen mit zwischen wenigstens einer Spritzdüse und einem Behälter für Waschflüssigkeit verlaufenden Durchflußraum einer Flüssigkeitsleitung, dem
   ein an eine elektrische Stromquelle anschließbarer
   Heizstrang zugeordnet ist,

   dadurch gekennzeichnet,

   daß der Durchflußraum (21,47) der Flüssigkeitsleitung
   (20) mit einer Hinleitung und einer Rückleitung wenigstens eines isolierten Heizdrahtes $(31,31_m)$ versehen
   ist, dessen beide freie Enden jeweils mit einem nach
   außen ragenden Stromanschluß (45) für die Stromquelle
   (58;63) verbunden und gegen den Durchflußraum isoliert
   sind.

2. Heizvorrichtung nach Anspruch 1, dadurch gekennzeichnet,
   daß der Heizdraht $(31,31_m)$ zumindest aus dem einen Ende (19) der Flüssigkeitsleitung (20) mit einem Steck-
   oder Schubende (32) hinausragt und/oder daß der Heizdraht (31) am Schubende (32) unter Bildung einer Schlaufe (33) U-förmig zu zwei etwa parallelen Trumen oder
   Abschnitten (29,30) gelegt ist, wobei gegebenenfalls
   das Schubende (32) aus einem gedrillten Abschnitt des
   Heizdrahtes (31) besteht.

2

3. Heizvorrichtung nach Anspruch 1 oder 2, dadurch gekennzeichnet, daß der die Hinleitung bildende Heizdraht
($31_m$) von Isolierwerkstoff (28) umgeben und am Steck-
oder Schubende (32) an einen den Isolierwerkstoff umhüllenden Mantel (27) aus leitendem Material angeschlossen ist (Fig. 3), und/oder daß das Schubende (32) des
Heizdrahtes (30,31) in die Spritzdüse (14) bzw. deren
Durchflußkanal (18) bzw. in den Behälter (51) bzw. in
den Schlauchanschlußstutzen (41) od. dgl. einer Flüssigkeitspumpe (24) der Flüssigkeitsleitung (20) einragt.

4. Heizvorrichtung nach einem der Ansprüche 1 bis 3, dadurch gekennzeichnet, daß die Stromanschlüsse (45) oder
entsprechende Stromkabel innerhalb eines Einspeisekörpers ($40,40_m,70,80$) od. dgl. mit den Enden des Heizdrahtes (29,30;31) verbunden sind, wobei gegebenenfalls
der Einspeisekörper ($40,40_m$) Schlauchstutzen (41) od.
dgl. aufweist, welche in einen sie verbindenden Durchflußraum (47) des Einspeisekörpers münden.

5. Heizvorrichtung nach wenigstens einem der Ansprüche 1
bis 4, dadurch gekennzeichnet, daß der Einspeisekörper
($40,40_m$) neben dem Durchflußraum für die Waschflüssigkeit (Q) Aufnahmeräume (42) für die darin abgedichteten
Stromanschlüsse (45) od. dgl. aufweist, von denen der
daran festliegende isolierte Heizdraht (31) in den Durchflußraum (47) geführt ist, wobei gegebenenfalls der Einspeisekörper ($40_m$) aus den Schlauchstutzen (41) und davon abragenden hohlen Anschlußarmen (49) zur Aufnahme
des Stromanschlüsse (45) od. dgl. besteht, und/oder die
Heizdrahtabschnitte (29,30) zwischen den Schlauchstutzen
(41) und einem darin vorgesehenen Einschubrohr (38) verlaufen.

3

6. Heizvorrichtung nach wenigstens einem der Ansprüche 1
   bis 5, dadurch gekennzeichnet, daß der Einspeisekörper
   als T-Stück oder als Druckventil ausgebildet ist.

7. Heizvorrichtung nach wenigstens einem der Ansprüche 1
   bis 6, dadurch gekennzeichnet, daß die Stromanschlüsse
   (45) am Einspeisekörper (40,40$_m$) gegenläufig vorgesehen
   sind (Fig. 4), und/oder daß beidseits des Durchflußraums
   (47) jeweils ein Aufnahmeraum (42) vorgesehen ist und
   die Enden des Heizdrahtes (31) als Heizdrahtabschnitte
   (29,30) nach Austritt aus ihren Aufnahmeräumen (42) weggeleitet sind, wobei gegebenenfalls die Heizdrahtabschnitte (29,30) nach Austritt aus den Aufnahmeräumen (42)
   gegenläufig weggeleitet sind.

8. Heizvorrichtung nach wenigstens einem der Ansprüche 4
   bis 7, dadurch gekennzeichnet, daß der Heizdraht (31)
   im Durchflußraum (47) des Einspeisekörpers (40) zumindest
   ein durchgehendes Trum (31$_m$) anbietet sowie zwei gegenläufig abgehende Anschlußtrume (30) und/oder daß die Aufnahmeräume (42) Sackbohrungen sind, die gegebenenfalls
   mit Vergußmasse isoliert und gefüllt sind.

9. Heizvorrichtung mit einer Flüssigkeitspumpe samt Ansaugstutzen, welche an die Flüssigkeitsleitung angeschlossen
   ist, nach wenigstens einem der Ansprüche 1 bis 8, insbesondere 1 bis 4, dadurch gekennzeichnet, daß der Einspeisekörper (80) mit einem rohrartigen Teil (75,76) den
   Ansaugstutzen (25) umgibt und einen Führungsraum (83)
   für die Trume (29,30) des Heizkabels (31) aufweist, welche in einem Basiskörper (77) des Einspeisekörpers mit
   den Stromanschlüssen (45) verbunden sind, wobei der
   Basiskörper (77) des Einspeisekörpers (40,40$_m$,80) gegebenenfalls mit Vergußmasse isoliert und gefüllt ist.

10. Heizvorrichtung nach Anspruch 9, dadurch gekennzeichnet, daß der Basiskörper (77) aus zwei Basisscheiben
(78,79) besteht, deren jede an eine Hülse (75,76) angeschlossen ist, die zusammen den rohrartigen Teil bilden, und/oder daß der Basiskörper (77) mit einem Kragen
(88) einen Pumpenraum (22) zumindest teilweise umgibt,
wobei gegebenenfalls die Hülsen (75,76) unterschiedlichen Durchmessers ($d_1$,$d_2$) koaxial mit dem Ansaugstutzen
(25) verlaufen und einen Spaltraum (83) für die Leitungen (29,30) bilden.

11. Heizvorrichtung nach Anspruch 9 oder 10, dadurch gekennzeichnet, daß die Leitungen (29,30) im Spaltraum
(83) um dessen Innenwandung (75) gewickelt sind, und/oder,
daß im Basiskörper (75), insbesondere zwischen den Basisscheiben (78,79), beidseits eines PTC-Heizelementes
(89) die Stromanschlüsse ($45_a$) verlaufen.

12. Heizvorrichtung nach wenigstens einem der Ansprüche
1 bis 11, dadurch gekennzeichnet, daß die Stromanschlüsse (45) in einem Heizstromkreis (59,60) liegen,
dem eine temperaturabhängige Regelschaltung zugeordnet
ist, wobei gegebenenfalls im Heizstromkreis (59,60)
ein Schaltrelais (56) vorges en und diese an eine
Batterie (58) des Fahrzeuges angeschlossen ist, und daß
ein Anschluß (62) des Schaltrelais an eine Lichtmaschine (63) zur ladeabhängigen Steuerung des Heizstromkreises dient.

13. Heizvorrichtung nach wenigstens einem der Ansprüche
    1 bis 12, dadurch gekennzeichnet, daß ein Teil der
    den Heizdraht (31) führenden Flüssigkeitsleitung (20)
    mit ihrem Einspeisekörper (40,40$_m$) dem Innenraum des
    Behälters (51) für die Waschflüssigkeit zugeordnet ist,
    ihn bevorzugt durchsetzt, und/oder daß ein Bolzen (84)
    mit achsparallelen Bohrungen (85 bis 87.) zur Aufnahme
    von Schalter (64) und Sicherung (57) vorgesehen ist.

0240832

**Fig.5**

**Fig.3**

**Fig.4**

**Fig.1**

**Fig.2**

A - 1/3

# Fig.6

# Fig.7

0240832

**Fig.8**

**Fig.9**

**Fig.10**

**Fig.11**

A - 143

0240832

Fig.13

Fig.12

Fig.14

A-143

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 121 681 (KEEN et al.) * Seite 2, Zeilen 43-50; Seite 2, Zeilen 8-18 * | 1,4-6 | B 60 S 1/48 |
| Y | | 2,7,8, 12,13 | |
| | --- | | |
| Y | DE-U-7 431 778 (YMOS-METALLWERKE) * Seite 5, Zeilen 11-19 * | 2,7,8 | |
| A | | 3 | |
| | --- | | |
| Y | DE-A-3 324 120 (WETZIG) * Seite 7, Zeile 30 - Seite 8, Zeile 36; Seite 9, Zeilen 15-31 * | 12 | |
| | | | RECHERCHIERTE SACHGEBIETE (Int. Cl.4) |
| A | | 11 | B 60 S 1/00 |
| | --- | | |
| A | FR-A-2 419 849 (CARO) * Figur 3 * | 9,10 | |
| | --- | | |
| A | DE-U-7 727 528 (KARL) * Figur * | 2 | |
| | --- | | |
| Y | US-A-4 090 668 (KOCHENOUR) * Spalte 7, Zeilen 9-18; Figur 4 * | 13 | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 15-07-1987 | STANDRING M A |